# EUROPEAN PATENT APPLICATION

(11) **EP 4 484 325 A1**
(43) Date of publication of application: **01.01.2025**
(21) Application number: 22948920.8
(22) Date of filing: 19.09.2022
(51) Int. Cl.: B65D 47/34

(54) **ALL-PLASTIC SINGLE-MATERIAL PRESS PUMP**

(30) Priority: 27.06.2022 CN 202210732989
(71) Applicant: Majesty Holdings Co., Ltd., Zhongshan, Guangdong 528400 (CN)
(72) Inventor: LIANG, Peihui, Zhongshan, Guangdong 528400 (CN); ZHU, Maoyong, Zhongshan, Guangdong 528400 (CN); ZHANG, Yonglei, Zhongshan, Guangdong 528400 (CN); LIANG, Jinkao, Zhongshan, Guangdong 528400 (CN)
(74) Representative: Manresa Medina, José Manuel
(86) International application number: PCT/CN2022/119647
(87) International publication number: WO 2024/000831

(57) **Abstract**

An all-plastic single-material press pump, comprising a press head (1), a pump housing (2), a closure (3), a locking cap (21), a pump rod (4), a spring (5), a one-way valve (7), a piston (6), and a dip tube (8) which are made of a same plastic material. The closure (3) is connected to the upper end of the pump housing (2) in an inserted mode; the pump housing (2) is provided with an upper pump chamber (22) and a lower pump chamber (23); the locking cap (21) is provided between the upper pump chamber (22) and the lower pump chamber (23); the upper end of the pump rod (4) is fixedly inserted into the press head (1); the pump rod (4) passes through the locking cap (21) and extends into the lower pump chamber (23); the spring (5) is provided in the upper pump chamber (22); the pump rod (4) is provided with a suction channel (41); the lower end of the pump rod (4) is provided with a liquid inlet (42) causing the suction channel (41) to be communicated with the lower pump chamber (23); and the piston (6) is located in the lower pump chamber (23) and is sleeved on the outer side of the pump rod (4) to move up and down along with the pump rod (4).

## Description

### TECHNICAL FIELD

The present disclosure relates to the technical field related to press pumps, and particularly, to an all-plastic single-material press pump.

### BACKGROUND

Press pumps have been widely used in daily chemical products, bringing convenience to life. In existing press pumps, metal springs are generally used as the rebound devices of the press heads, and glass beads are used as one-way sealing elements. Therefore, existing press pumps typically include materials such as plastic, metal, and glass. This necessitates disassembly and sorting of the press pumps for recycling, which not only complicates the recycling process but also increases labor costs.

All-plastic press pumps use all-plastic parts to solve the problem of disassembly and sorting. However, in practical applications, various parts of existing all-plastic press pumps usually use various types of plastics such as PP, PE, TPE, etc., different types of plastic materials have different melting points and crystallization properties, leading to poor compatibility. In the actual recycling process, the contents of different types of plastic materials in the recycled materials are uncertain. If the recycled materials are directly blended and recycled without being sorted, the mechanical properties and aesthetic properties of the recycled mixed materials are degraded significantly. Although there are a variety of sorting methods, the sorting process is time-consuming and costly, and the recycled materials are often mixed during recycling, resulting in recycled plastic products with inferior performance.

The present disclosure is proposed based on this situation.

### SUMMARY

In view of this, one of the objectives of the present disclosure is to provide an all-plastic single-material press pump made of a single plastic material that does not require disassembling or sorting, thus facilitating recycling and reducing recycling costs.

The technical solutions adopted by the present disclosure to solve the technical problems are as follows:
An all-plastic single-material press pump includes a press head, a pump housing, a lock bottle cap, a locking cap, a pump rod, a spring, a one-way valve, a piston, and a dip tube which are made of the same plastic material. The lock bottle cap is connected to an upper end of the pump housing in an inserted mode; the pump housing is provided with an upper pump chamber and a lower pump chamber; the locking cap is disposed between the upper pump chamber and the lower pump chamber; an upper end of the pump rod is fixedly inserted into the press head; the pump rod passes through the locking cap and extends into the lower pump chamber; the spring is disposed in the upper pump chamber; the pump rod is provided with a suction channel; a lower end of the pump rod is provided with a liquid inlet connecting the suction channel and the lower pump chamber; the piston is located in the lower pump chamber and is arranged around the pump rod to move up and down along with the pump rod; the one-way valve is located at a lower end of the lower pump chamber; and the dip tube is connected to a lower end of the pump housing in an inserted mode.

Preferably, the press head, the pump housing, the lock bottle cap, the locking cap, the pump rod, the spring, the one-way valve, the piston, and the dip tube are all made of a PE material or a PP material.

Preferably, a gasket is disposed inside the lock bottle cap, and the gasket is made of the same plastic material as the lock bottle cap.

Preferably, a locking structure restricting an upward and downward movement of the lock bottle cap is disposed on an outer wall of the pump housing.

Preferably, the locking structure includes a clamping groove formed in the pump housing, a locking convex ring, and a clamping ring disposed on the lock bottle cap, and an upper side of the locking convex ring is provided with a conical surface gradually expanding from top to bottom, and an inner side surface of the clamping ring close to the pump housing is a conical surface gradually expanding from top to bottom.

Preferably, the pump rod is provided with an upper limiting stand and a lower limiting stand above and below the liquid inlet respectively, the piston is located between the upper limiting stand and the lower limiting stand and is movable between the upper limiting stand and the lower limiting stand up and down, and the piston is provided with a sealing ring capable of cooperating with the lower limiting stand to achieve a sealed connection. When the lower limiting stand presses upwards on the sealing ring, the communication between the suction channel and the lower pump chamber is cut off. When the pump rod moves downwards, the lower limiting stand is separated from the sealing ring downwards, and the suction channel is communicated with the lower pump chamber through the liquid inlet, and the upper limiting stand moving downwards for a section can press the piston to push the piston to move downwards.

Preferably, an inner sleeve cooperating with the pump rod is disposed on the piston, the sealing ring is disposed at a lower end of the inner sleeve, the inner sleeve cooperates with the upper limiting stand through an upper end surface of the inner sleeve and is in sealed connection when the upper limiting stand presses downwards the upper end surface of the inner sleeve, and an upper end of the inner sleeve is provided with a convex ring protruding inwards and interfering and cooperating with an outer side wall of the pump rod.

Preferably, the spring is integrally formed by injection molding.

Preferably, the spring is of a hollow structure that is open at both ends, including an upper cup body, a lower cup body, and a straight cylinder body connecting the upper cup body and the lower cup body, all of which are elastic. The upper cup body and the lower cup body are symmetrically shaped into a cup shape. The inner diameters of the upper cup body and the lower cup body gradually expand from one end close to the straight cylinder body to the other end, and an outer protrusion is disposed at one end of each of the upper cup body and the lower cup body away from the straight cylinder body.

Preferably, the spring is of a hollow structure that is open at both ends, including an upper bowl body and a lower bowl body, both of which are elastic. The upper bowl body and the lower bowl body are symmetrical up and down, and the upper bowl body is shaped into a bowl-shaped structure with a large upper end and a small lower end. The lower bowl body is shaped into a bowl-shaped structure with a small upper end and a large lower end. The lower end of the upper bowl body and the upper end of the lower bowl body are connected to each other.

Preferably, the spring is an elastic plastic ring-shaped member with an opening in a side surface, and a reinforcing rib is disposed on an outer side surface of the elastic plastic ring-shaped member.

Preferably, a buckle capable of preventing the press head from being pressed downwards is detachably connected to the pump rod between the lock bottle cap and the press head. The buckle is made of the same plastic as the lock bottle cap.

Compared with the existing technology, the present disclosure has the following beneficial effects. Since all parts of the present disclosure are made of a single type of plastic material, there is no need to disassemble and separate the press pump after recycling, and there is no need to sort different plastic materials. The plastic material can be directly melted into a liquid plastic and re-injected to form into other products for use, thereby lowering the difficulty and the recycling cost.

### BRIEF DESCRIPTION OF DRAWINGS

FIG. 1 is a schematic view of an overall structure of the present disclosure;
FIG. 2 is a cross-sectional view of the present disclosure;
FIG. 3 is an exploded view of the present disclosure;
FIG. 4 is a schematic enlarged view of a part A in FIG.2;
FIG.5 is a schematic structural view of a pump rod;
FIG.6 is a schematic enlarged view of a part B in FIG.2;
FIG.7 is a schematic structural view of a first embodiment of a spring;
FIG.8 is a schematic structural view of a second embodiment of the spring;
FIG.9 is a schematic structural view of a third embodiment of the spring; and
FIG.10 is a cross-sectional view of the second embodiment of the present disclosure.

### DETAILED DESCRIPTION

The technical solutions in the embodiments of the present disclosure will be clearly and completely described below with reference to the accompanying drawings.

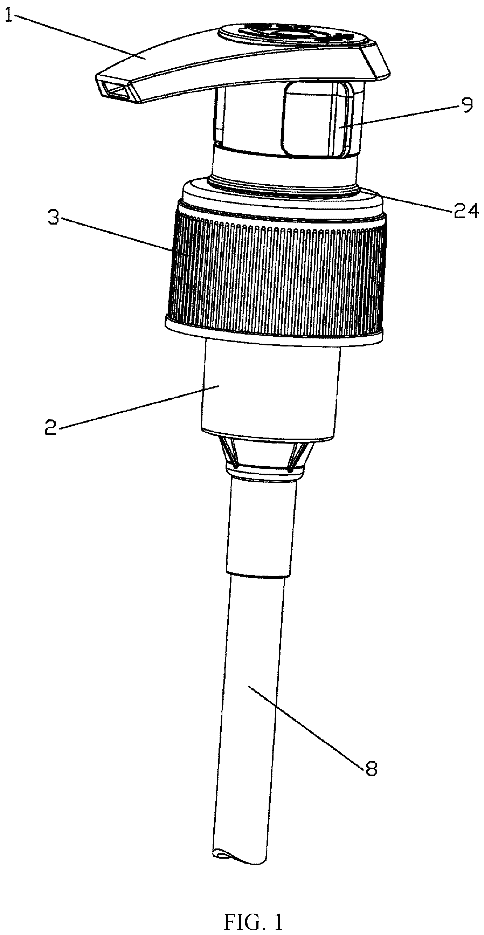

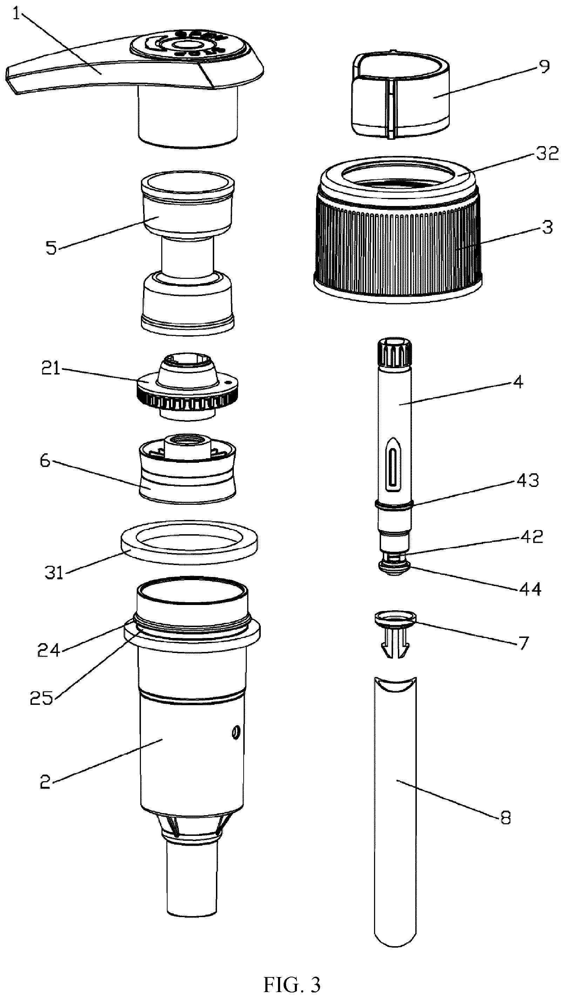

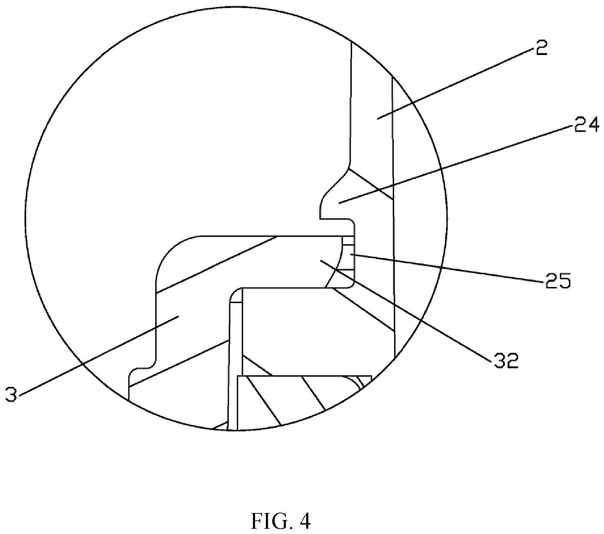

Referring to FIGS. 1 to 4, the present disclosure proposes an all-plastic single-material press pump, which includes a press head 1, a pump housing 2, a lock bottle cap 3, a locking cap 21, a pump rod 4, a spring 5, a one-way valve 7, a piston 6, a dip tube 8 which are made of the same plastic material. The lock bottle cap 3 is connected to an upper end of the pump housing 2 in an inserted mode, the pump housing 2 is provided with an upper pump chamber 22 and a lower pump chamber 23. The locking cap 21 is disposed between the upper pump chamber 22 and the lower pump chamber 23. An upper end of the pump rod 4 is fixedly inserted into the press head 1. The pump rod 4 passes through the locking cap 21 and extends into the lower pump chamber 23. The spring 5 is disposed in the upper pump chamber 22. The pump rod 4 is provided with a suction channel 41. A lower end of the pump rod 4 is provided with a liquid inlet 42 connecting the suction channel 41 and the lower pump chamber 23. The piston 6 is located in the lower pump chamber 23 and is arranged around the pump rod 4 to move up and down along with the pump rod 4. The one-way valve 7 is located at a lower end of the lower pump chamber 23. The dip tube 8 is connected to a lower end of the pump housing 2 in an inserted mode.

All parts of the all-plastic single-material press pump are made of the same type of plastic material. There is no need to disassemble and separate the press pump after recycling, and there is no need to sort different plastic materials. The plastic material can be directly melted into a liquid plastic and re-injected to form into other products for use, thereby lowering the difficulty and the recycling cost. Moreover, this also avoids the corrosion and contamination issues associated with the use of a metal spring.

In the embodiment, the press head 1, the pump housing 2, the lock bottle cap 3, the locking cap 21, the pump rod 4, the spring 5, the one-way valve 7, the piston 6, and the dip tube 8 are all made of a PE (Polyethylene) material or a PP (Polypropylene) material, such that the press pump is environmentally-friendly and safe.

In the embodiment, a gasket 31 is disposed on an inner side of the lock bottle cap 3. The gasket 31 is made of the same plastic material as the lock bottle cap 3. The gasket 31 can make the lock bottle cap 3 achieve better sealing when being connected to a daily chemical product bottle body.

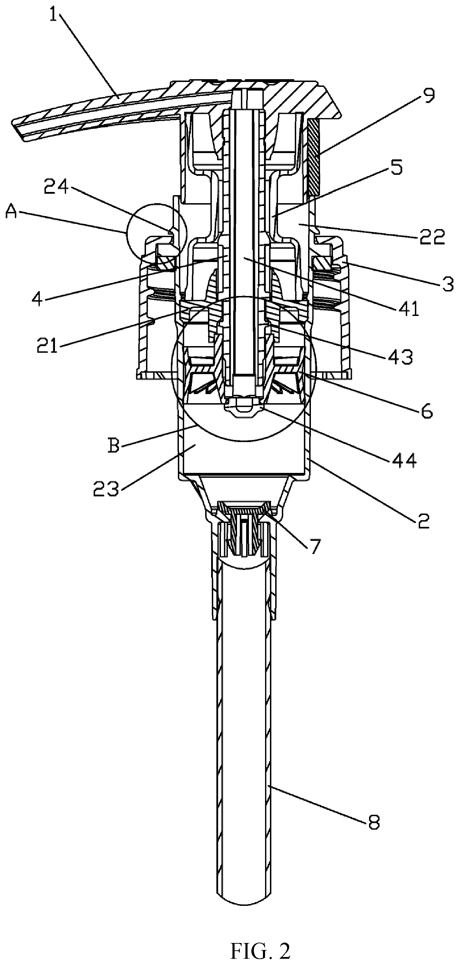

As shown in FIGS. 2 to 4, a locking structure restricting an upward and downward movement of the lock bottle cap 3 is disposed on an outer wall of the pump housing 2, which can prevent the pump housing 2 and the lock bottle cap 3 from loosening, thereby strengthening the stability of the connection.

As shown in FIGS. 2 to 4, the locking structure includes a clamping groove 25 formed in the pump housing 2, a clamping convex ring 24, and a clamping ring 32 disposed on the lock bottle cap 3. An upper side of the locking convex ring 24 is provided with a conical surface gradually expanding from top to bottom, and an inner side surface of the clamping ring 32 close to the pump housing 2 is a conical surface gradually expanding from top to bottom. During the assembling process of the lock bottle cap 3 and the pump housing 2, the assembling work can be completed by only fitting the lock bottle cap 3 onto the pump housing 2 from top to bottom, allowing the clamping ring 32 to insert into the clamping groove 25, which is simple and fast. After the assembling is completed, the locking convex ring 24 can limit the up-down movement of the lock bottle cap 3, so that the structure is simple and convenient and reliable. In a case that the clamping ring 32 is inserted into the clamping groove 25 from top to bottom, when the inner side surface of the clamping ring 32 close to the pump housing 2 is in contact with the conical surface on the upper side of the locking convex ring 24, the clamping ring 32 can be pressed into the clamping groove 25 downwards smoothly, so that there will be no major jamming when the clamping ring 32 is inserted into the clamping convex ring 24, making the assembling work of the lock bottle cap 3 and the pump housing 2 more convenient and smoother.

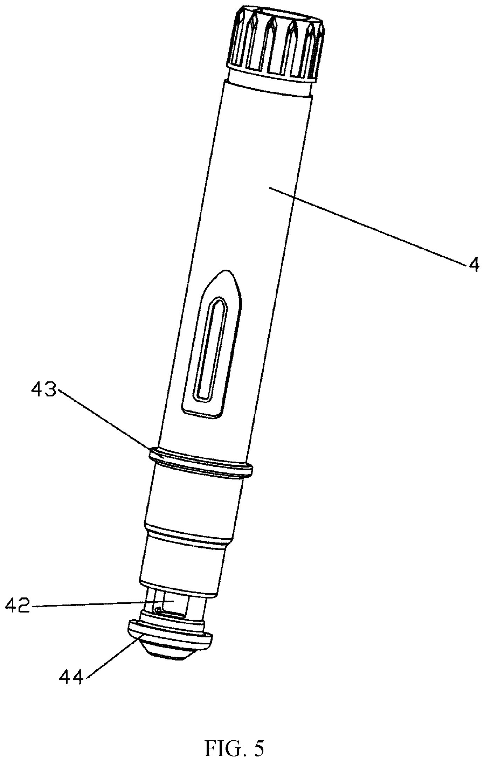

As shown in FIGS. 2, 5 and 6, the pump rod 4 is provided with an upper limiting stand 43 and a lower limiting stand 44 above and below the liquid inlet 42 respectively, and the piston 6 is located between the upper limiting stand 43 and the lower limiting stand 44 and can move up and down between the upper limiting stand 43 and the lower limiting stand 44. The piston 6 is provided with a sealing ring 61 capable of cooperating with the lower limiting stand 44 to achieve a sealed connection. When the pump rod 4 bounces upwards, the lower limiting stand 44 pressing upwards on the sealing ring 61 cuts off the communication between the suction channel 41 and the lower pump chamber 23. After the press head 1 is pressed down, when the pump rod 4 moves downwards, the lower limiting stand 44 is separated from the sealing ring 61 downwards, and the suction channel 41 is communicated with the lower pump chamber 23 through the liquid inlet 42, and the upper limiting stand 43 moving downwards by a certain distance can press the piston 6 to push the piston 6 to move downwards together to start pumping a liquid in the lower pump chamber 23 out through the suction channel 41. After the press head 1 which is pressed is released, under the elastic action of the spring 5, the pump rod 4 bounces upwards and presses against the bottom of the sealing ring 61 through the lower limiting stand 44 to pull up the piston 6. A negative pressure is formed inside the lower pump chamber 23, and the one-way valve 7 is opened, allowing the liquid in the bottle to flow into the lower pump chamber 23 through the dip tube 8. The motion structure composed of the pump rod 4 and the piston 6 is simple, which facilitates easy assembly with fewer components.

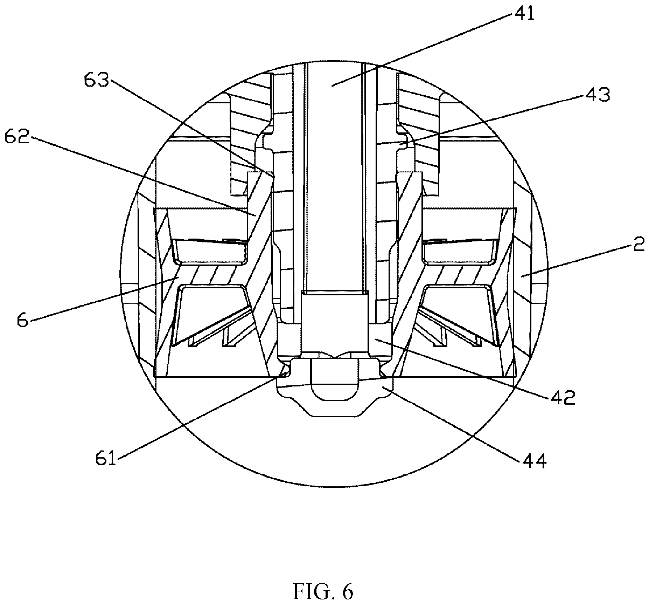

As shown in FIG. 6, an inner sleeve 62 cooperating with the pump rod 4 is disposed on the piston 6. The sealing ring 61 is disposed at a lower end of the inner sleeve 62. The inner sleeve 62 cooperates with the upper limiting stand 43 through an upper end surface and is in sealed connection when the upper limiting stand 43 presses downwards the upper end surface of the inner sleeve 62, and an upper end of the inner sleeve 62 is provided with a convex ring protruding inwards and interfering and cooperating with an outer side wall of the pump rod 4. A lower middle part of the pump rod 4 is of a stepped shaft structure with a large top and a small bottom, and the outer diameter of the pump rod 4 corresponding to the upper limiting stand 43 is larger than the outer diameter of the pump rod 4 corresponding to the lower limiting stand 44. An inner hole of the inner sleeve 62 is large at the top and small at the bottom, and can allow the lower limiting stand 44 to pass from top to bottom and limit the passage of the upper limiting stand 43. The sealing ring 61 protrudes from a lower opening of the inner sleeve 62 and can allow the lower limiting stand 44 to pass from top to bottom under the action of an external force, resulting in a simple structure and easy assembly.

In the embodiment, the spring 5 is integrally formed by injection molding, which facilitates production and has high molding accuracy.

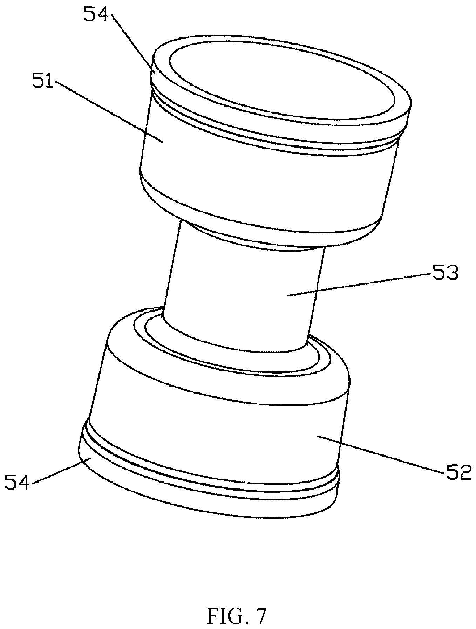

As shown in FIG. 7, as a first embodiment, the spring 5 is of a hollow structure that is open at both ends, including an upper cup body 51, a lower cup body 52, and a straight cylinder body 53 connecting the upper and lower cup bodies 52. The upper cup body 51 and the lower cup body 52 are symmetrical up and down and formed into a cup shape. The inner diameters of the upper cup body 51 and the lower cup body 52 both gradually expand from one end close to the straight cylinder body 53 to the other end. An outer protrusion 54 is disposed at one end of each of the upper cup body 51 and the lower cup body 52 away from the straight cylinder body 53. The spring is simple in structure and good in elasticity.

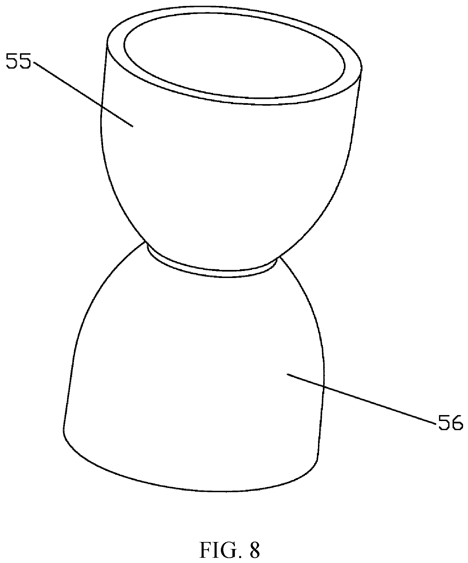

As shown in FIG. 8, as a second embodiment, the spring 5 is of a hollow structure that is open at both ends, including an upper bowl body 55 and a lower bowl body 56, both of which are elastic. The upper bowl body 55 and the lower bowl body 56 are symmetrical up and down, and the upper bowl body 55 is shaped into a bowl-shaped structure with a large upper end and a small lower end. The lower bowl body 56 is shaped into a bowl-shaped structure with a small upper end and a large lower end. The lower end of the upper bowl body 55 and the upper end of the lower bowl body 56 are connected to each other. The spring is simple in structure and good in elasticity.

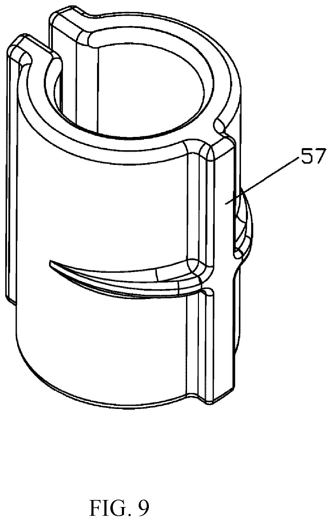

As shown in FIG. 9, as a third embodiment, the spring 5 is an elastic plastic ring-shaped member with an opening in a side surface. The spring is simple in structure and good in elasticity. A reinforcing rib 57 is disposed on an outer side surface of the elastic plastic ring-shaped member, which can enhance the strength of the elastic plastic ring-shaped member.

As shown in FIGS. 1 to 3, a buckle 9 capable of preventing the press head 1 from being pressed downward is detachably connected to the pump rod 4 between the lock bottle cap 3 and the press head 1. The buckle 9 is made of the same type of plastic material as the lock bottle cap 3, which can prevent the user from accidentally pressing the press head 1 to cause liquid leakage.

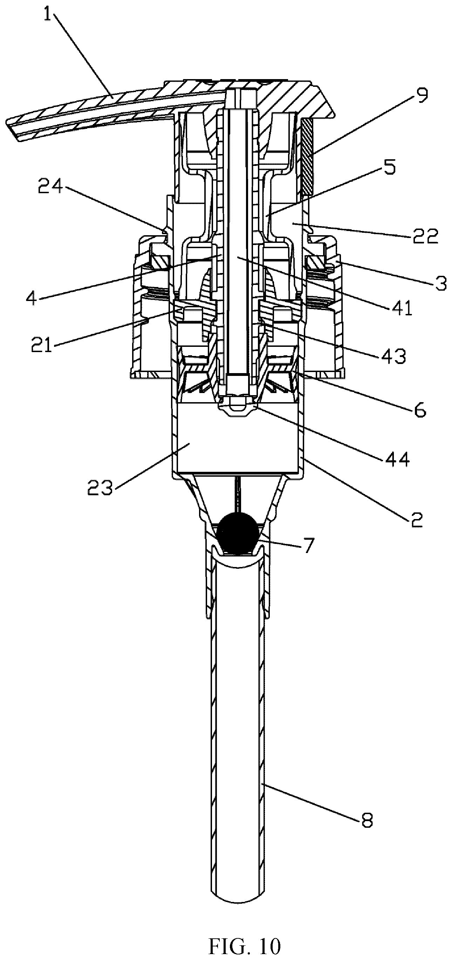

As shown in FIG. 10, as the second embodiment of the present disclosure, the one-way valve 7 is a pump bead. The pump bead is made of the same plastic material as the lock bottle cap 3 and has a simple structure.

The above describes only preferred embodiments of the present disclosure. The technical solutions achieving the objectives of the present disclosure by essentially same means all shall fall within the protection scope of the present disclosure.

## Claims

1. An all-plastic single-material press pump, comprising a press head (1), a pump housing (2), a lock bottle cap (3), a locking cap (21), a pump rod (4), a spring (5), a one-way valve (7), a piston (6), and a dip tube (8) made of a same plastic material, wherein the lock bottle cap (3) is connected to an upper end of the pump housing (2) in an inserted mode; the pump housing (2) is provided with an upper pump chamber (22) and a lower pump chamber (23); the locking cap (21) is disposed between the upper pump chamber (22) and the lower pump chamber (23); an upper end of the pump rod (4) is fixedly inserted into the press head (1); the pump rod (4) passes through the locking cap (21) and extends into the lower pump chamber (23); the spring (5) is disposed in the upper pump chamber (22); the pump rod (4) is provided with a suction channel (41); a lower end of the pump rod (4) is provided with a liquid inlet (42) connecting the suction channel (41) and the lower pump chamber (23); the piston (6) is located in the lower pump chamber (23) and is arranged around the pump rod (4) to move up and down along with the pump rod (4); the one-way valve (7) is located at a lower end of the lower pump chamber (23); and the dip tube (8) is connected to a lower end of the pump housing (2) in an inserted mode.

2. The all-plastic single-material press pump according to claim 1, wherein the press head (1), the pump housing (2), the lock bottle cap (3), the locking cap (21), the pump rod (4), the spring (5), the one-way valve (7), the piston (6), and the dip tube (8) are all made of a PE or PP material.

3. The all-plastic single-material press pump according to claim 1, wherein a gasket (31) is disposed inside the lock bottle cap (3), and the gasket (31) is made of the same plastic material as the lock bottle cap (3).

4. The all-plastic single-material press pump according to claim 1, wherein a locking structure restricting an upward and downward movement of the lock bottle cap (3) is disposed on an outer wall of the pump housing (2).

5. The all-plastic single-material press pump according to claim 4, wherein the locking structure comprises a clamping groove (25) formed in the pump housing (2), a locking convex ring (24), and a clamping ring (32) disposed on the lock bottle cap (3), and an upper side of the locking convex ring (24) is provided with a conical surface gradually expanding from top to bottom, and an inner side surface of the clamping ring (32) close to the pump housing (2) is a conical surface gradually expanding from top to bottom.

6. The all-plastic single-material press pump according to claim 1, wherein the pump rod (4) is provided with an upper limiting stand (43) and a lower limiting stand (44) above and below the liquid inlet (42) respectively, the piston (6) is located between the upper limiting stand (43) and the lower limiting stand (44) and is movable between the upper limiting stand (43) and the lower limiting stand (44) up and down, and the piston (6) is provided with a sealing ring (61) capable of cooperating with the lower limiting stand (44) to achieve a sealed connection; when the lower limiting stand (44) presses upwards on the sealing ring (61), communication between the suction channel (41) and the lower pump chamber (23) is cut off; when the pump rod (4) moves downwards, the lower limiting stand (44) is separated from the sealing ring (61) downwards, and the suction channel (41) is communicated with the lower pump chamber (23) through the liquid inlet (42), and the upper limiting stand (43) moving downwards for a section is capable of pressing the piston (6) to push the piston (6) to move downwards.

7. The all-plastic single-material press pump according to claim 6, wherein an inner sleeve (62) cooperating with the pump rod (4) is disposed on the piston (6), the sealing ring (61) is disposed at a lower end of the inner sleeve (62), the inner sleeve (62) cooperates with the upper limiting stand (43) through an upper end surface of the inner sleeve (62) and is in sealed connection when the upper limiting stand (43) presses downwards the upper end surface of the inner sleeve (62), and an upper end of the inner sleeve (62) is provided with a convex ring (63) protruding inwards and interfering and cooperating with an outer side wall of the pump rod (4).

8. The all-plastic single-material press pump according to claim 1, wherein the spring (5) is integrally formed by injection molding.

9. The all-plastic single-material press pump according to claim 8, wherein the spring (5) is of a hollow structure that is open at both ends, comprising an upper cup body (51), a lower cup body (52), and a straight cylinder body (53) connecting the upper cup body (51) and the lower cup body (52), all of which are elastic; the upper cup body (51) and the lower cup body (52) are symmetrical and shaped into a cup shape; each of inner diameters of the upper cup body (51) and the lower cup body (52) gradually expands from one end close to the straight cylinder body (53) to the other end, and an outer protrusion (54) is disposed at one end of each of the upper cup body (51) and the lower cup body (52) away from the straight cylinder body (53).

10. The all-plastic single-material press pump according to claim 8, wherein the spring (5) is of a hollow structure that is open at both ends, comprising an upper bowl body (55) and a lower bowl body (56), both of which are elastic; the upper bowl body (55) and the lower bowl body (56) are symmetrical up and down, and the upper bowl body (55) is shaped into a bowl-shaped structure with a large upper end and a small lower end, and the lower bowl body (56) is shaped into a bowl-shaped structure with a small upper end and a large lower end; and the lower end of the upper bowl body (55) and the upper end of the lower bowl body (56) are connected to each other.

11. The all-plastic single-material press pump according to claim 8, wherein the spring (5) is an elastic plastic ring-shaped member with an opening in a side surface, and a reinforcing rib (57) is disposed on an outer side surface of the elastic plastic ring-shaped member.

12. The all-plastic single-material press pump according to claim 1, wherein a buckle (9) capable of preventing the press head (1) from being pressed downwards is detachably connected to the pump rod (4) between the lock bottle cap (3) and the press head (1), and the buckle (9) is made of the same plastic as the lock bottle cap (3).
